# EUROPEAN PATENT SPECIFICATION

(11) **EP 0 978 035 B1**
(45) Date of publication and mention of the grant of the patent: **02.02.2005**
(21) Application number: 97931339.2
(22) Date of filing: 24.06.1997
(51) Int. Cl.: G06F 9/46

(54) **METHODS AND APPARATUS FOR MANAGING OBJECTS IN A DISTRIBUTED ENVIRONMENT**
VERFAHREN UND GERÄT ZUR OBJEKTVERWALTUNG IN EINER VERTEILTEN UMGEBUNG
METHODE ET APPAREIL DESTINES A LA GESTION D'OBJETS DANS UN ENVIRONNEMENT REPARTI

(30) Priority: 25.06.1996 US 669943
(43) Date of publication of application: 09.02.2000
(73) Proprietor: UNISYS CORPORATION, Blue Bell, PA 19424 (US)
(72) Inventor: MAIMONE, William, D., Birdsboro, PA 19508 (US)
(74) Representative: Modiano, Guido, Dr.-Ing.
(86) International application number: PCT/US1997/010896
(87) International publication number: WO 1997/050032

(56) References cited:
- EP-A- 0 553 560
- US-A- 5 488 721
- SANTOSH K SHRIVASTAVA ET AL: "STRUCTURING FAULT-TOLERANT OBJECT SYSTEMS FOR MODULARITY IN A DISTRIBUTED ENVIRONMENT" IEEE TRANSACTIONS ON PARALLEL AND DISTRIBUTED SYSTEMS, vol. 5, no. 4, 1 April 1994, pages 421-432, XP000439637

## Description

### FIELD OF THE INVENTION

The present invention relates generally to distributed and object-oriented computing systems, and more particularly to a method and apparatus for efficiently managing objects in a distributed computing environment.

### BACKGROUND OF THE INVENTION

Distributed computing and object-oriented programming are two aspects of the computer field which have recently become very popular, particularly in large enterprises. In a distributed computing environment in which object-oriented programming techniques are practiced, such as in a client/server distributed environment, there are inefficiencies in the method by which objects are utilized by the various users (which are themselves objects) in the system. For example, in current object management schemes, when a user in one part of the enterprise references an object in another, remote part of the enterprise, an object broker is employed to find the referenced object and to control the exchange of messages between the user and the object. This concept is exemplified, e.g., in a situation in which a word processor object is utilized to edit a remotely-located document object. In current distributed client/server systems, an object broker is employed to transmit and receive messages across the network to and from the two objects. Given the limited bandwidth, and thus the limited speed, of the network, the rapidity at which communications between objects can be achieved is usually less than the processing speed of the client and server systems. Document EP-A-0 553 560 discloses a distributed computing environment wherein concurrent access to an object by multiple users is achieved by creating a copy of the object in each process that requires access to it and, when a change is made to the data in one copy of the object, all of the other copies must be updated to reflect this change. A goal of the present invention is to provide a mechanism for improving the efficiency and speed of a distributed computing system in which objects are required to interact with each other.

### SUMMARY OF THE INVENTION

According to the present invention as defined in the appended claims, objects in a distributed network are transported around the network to where they are needed. This is in contrast to current object request broker technology which routes requests to objects. In a presently preferred implementation of the invention, there is a logically central, physically distributed object paging service. This is analogous to virtual paging for memory but, rather than paging blocks of memory into RAM from a local disk, the invention transports objects across a network to where they are needed from a network object store (e.g., file or database server), and recreates the needed object in the address space of the requester, or user, of the object. "Address space" refers to the addresses that a computer program can access, including the physical memory locations that a program can access, disjoint from other programs, together with the set of virtual addresses referring to those storage locations, which may be accessible by other programs.

Thus, in preferred embodiments of the present invention, when a client wishes to access an object, the client makes a request through a virtual object manager. The object is then made accessible to the client. When the client is finished working with the object, the client indicates this to the virtual object manager. The virtual object manager includes a virtual object table and a virtual
object store. The virtual object store address of the persistent copy of the object is contained within the entry for that object in the virtual object table. The virtual object store address could be, e.g., a network file name or SQL select depending on whether a network file server or network database is used as the persistent storage device. The virtual object store may be either a network file server or a network database. The entry for each object contains the data needed to recreate an active instance of the object.

In sum, the present invention moves a desired object to a user requesting access to the object, instead of moving messages from the user to the object and vice versa. Advantages inherent in the invention include:
1. The invention simplifies programming in a distributed object environment by permitting the programmer to focus on what he or she is asking the object to do, and not on managing the object itself.
2. The invention improves performance since the object is centrally managed. For example, centralized management can help place the object where it can be accessed by a user more efficiently, similar to caching and virtual memory management in operating systems but only now from the perspective of objects instead of just data, and from the perspective of the whole enterprise, and not just one system. Typically, the object will be positioned physically closer to, or within the address space of, the user, but this need not always be the case. For example, if the object exists on a particular server with which the client does not have a high speed connection, but the client does have a high speed data connection with a second server and that server has a high speed network connection to the first server, then the object could be moved from the first server to the second server so that it could be accessed more efficiently by the client.
3. The invention can be used in combination with existing object request broker technology.

Other features and advantages of the present invention are disclosed below.

### BRIEF DESCRIPTION OF THE DRAWINGS

Figure 1 schematically depicts a client/server distributed computing system in accordance with the present invention.
Figure 2 schematically depicts one presently preferred implementation of the Virtual Object Manager utilized in the system of Figure 1.
Figure 3 schematically depicts an example of a client system in accordance with a preferred embodiment of the present invention.
Figure 4 schematically depicts the address space of a client system in accordance with a preferred embodiment of the present invention.
Figure 5 is a flowchart of the operation of a distributed computing system in accordance with the present invention.

### DETAILED DESCRIPTION OF PREFERRED EMBODIMENTS

Generally, preferred embodiments of the present invention employ a technique whereby clients in enterprise systems employ a service called a "virtual object manager." The virtual object manager maintains a table of data indicating where all registered virtual object exist in the system. If a virtual object is currently inactive in the system, it resides in a virtual object store. The virtual object store may be either a file server or a database server. If the object is active, it exists in one of the address spaces on one of the systems in the enterprise.

When a client wishes to gain access to an object, it makes a request through the virtual object manager to access the object. This request may actually be transparent to the client, since a proxy object may be utilized to simplify the programming for the client. The object is then made accessible to the client in accordance with the methods described below.

When the client is finished working with the object, the client indicates this to the virtual object manager. This makes the virtual object manager compatible with known object brokering techniques (e.g., the Microsoft® OLE reference management paradigm of "AddRef" and "Release"). However, the virtual object manager has an advantage in that every time the object is released it does not necessarily have to be transitioned back into an inactive state. The object could stay where it is, in anticipation of being accessed again by the same client. If this occurs, the object will already be where it is needed and thus performance will be improved.

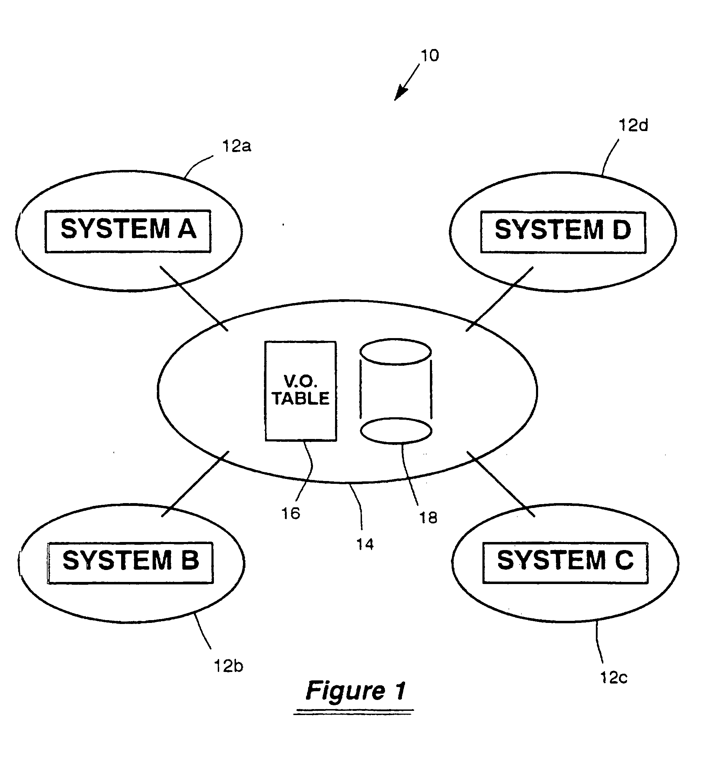

Referring to Figure 1, a distributed enterprise system (10) in accordance with the present invention comprises a plurality of systems (12a, 12b, 12c, 12d) each of which is operatively coupled to a virtual object manager (14). The virtual object manager (14) comprises a virtual object table (16) and a virtual object store (18).

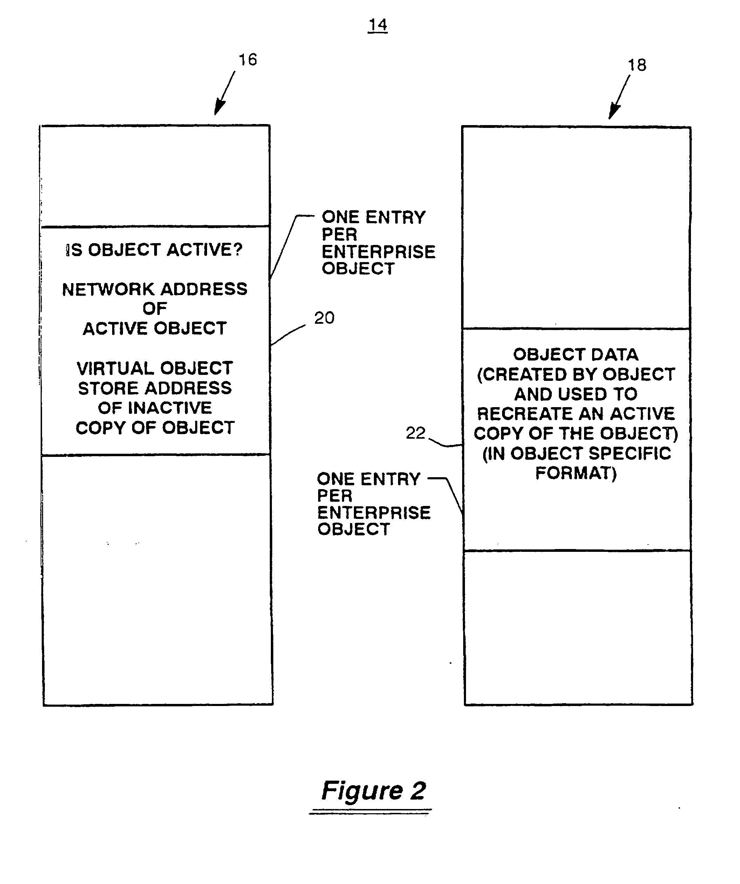

As shown in Figure 2, the virtual object table (16) comprises an entry (20) for each enterprise object. Each entry contains data indicating (a) whether the object is active or inactive, (b) a network address of an active copy of the object, if any, and (c)the virtual object store address of an inactive copy of the object. The virtual object store (18) similarly contains an entry (22) for each enterprise object. Each entry (22) contains data for the corresponding object. This data is created by the object and used to recreate an active copy of the object in an object specific format.

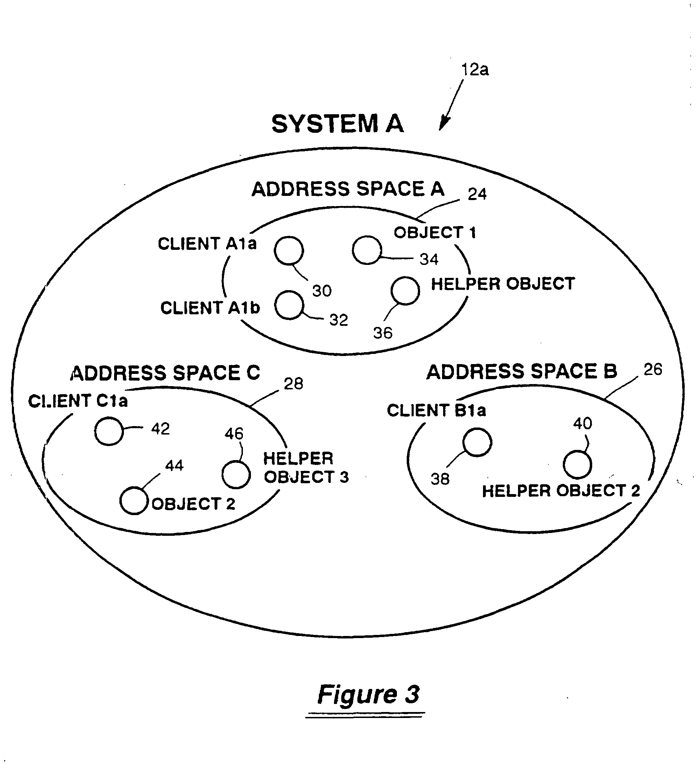

Figure 3 schematically depicts an example of a system (12a) of the enterprise (10)(Figure 1). As shown, an exemplary system includes a number of address spaces (24, 26, 28, respectively) denoted "Address Space A," "Address Space B, and "Address Space C." Each address space corresponds to one or more client objects and at least one helper object. For example, "Address Space A (24) encompasses client A1 (30), client A1b (32), and helper object (36). Within address space A is an object (34) denoted "object 1." Similarly, Address Space B contains a client (38) denoted "Client B1a" and a helper object (40) denoted "Helper Object 2." Address Space C (28) contains a client (42) denoted Client C1a, an object (44) denoted "Object 2," and a helper object (46) denoted "Helper Object 3". The present invention is not limited to systems containing any particular number of systems, address spaces per system, or client objects per address space. Thus, the embodiment of Figure 3 is merely illustrative of a presently preferred implementation of the present invention.

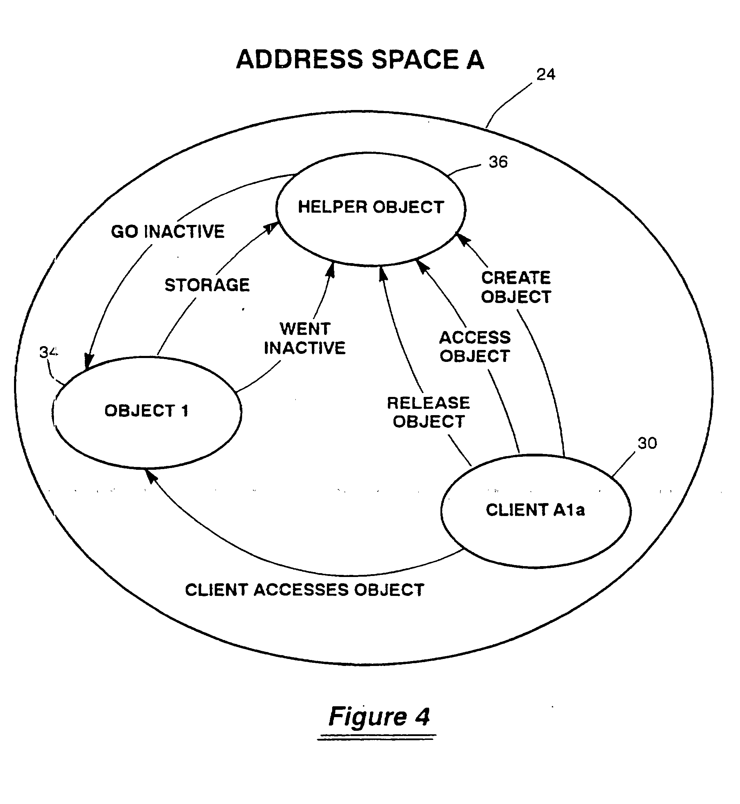

Figure 4 illustrates exemplary messages that may be passed among an object (34), helper object (36), and client object (30). As shown, the client object (30) may request access to the object (34). The object (34) sends a message to the helper object (36) when the object (34) requires access to a storage device, or to indicate that the object (34) has assumed an inactive state. The helper object (36) can send a message to the object (34) to instruct the object (34) to "go inactive." The client object (30) sends a message to the helper object (36) when the client (30) wants to release an object, access an object, or create an object. Each of the functions represented by Figure 4 is known to those of ordinary skill in the art, and so they will not be described in detail herein.

In the preferred embodiment, each system includes one or more address spaces, and each address space can be accessed by one or more clients. Each address space has a helper object. Clients request access to an object via the helper objects. Clients using the same helper object can share access to the requested object in the same address space. The helper object provides an interface to the client, creates and recreates objects, and connects to the virtual object manager across the network.

In the presently preferred embodiment of the invention, the client may call three functions of the helper object: (1) "create object", which creates an enterprise object, registers it with the virtual object manager, and returns a pointer to the object; (2) "access object", which requests access, via an object's name to an enterprise object (if the object exists, it is recreated in the client's address space, and the function returns a pointer to the object; (3) "release object", which informs the virtual object manager that the client is finished using the object.

Thus, the helper objects may also be used by other objects for (1) "storage", which allows the client to store its contents when it is going inactive; and (2) to generate a message, such as "WentInactive", to indicate that the object has completed storing its contents in the virtual object store and that it has gone into an inactive state. (Note: the term "object" by itself, as distinguished from "helper object" or "client object," refers to an object of interest to the client. The "object" has the ability to store its contents into persistent storage via the storage function of a helper object. It also provides a function, "GoInactive", which is used by the helper object to request that the object save itself to persistent storage and inactivate itself.)

In a presently preferred implementation of the invention, a Microsoft® SQL server is used as a network database. Microsoft® TCP/IP is used as a network transport, to communicate between the helper objects and the virtual object manager. Microsoft® OLE is used for basic object management. OLE provides the ability to dynamically create object instances, the ability to create interfaces that other objects can use, and the ability of an object to create the persistent data needed to recreate the active object at a later point in time. The clients, helper objects, and objects communicate via OLE interfaces.

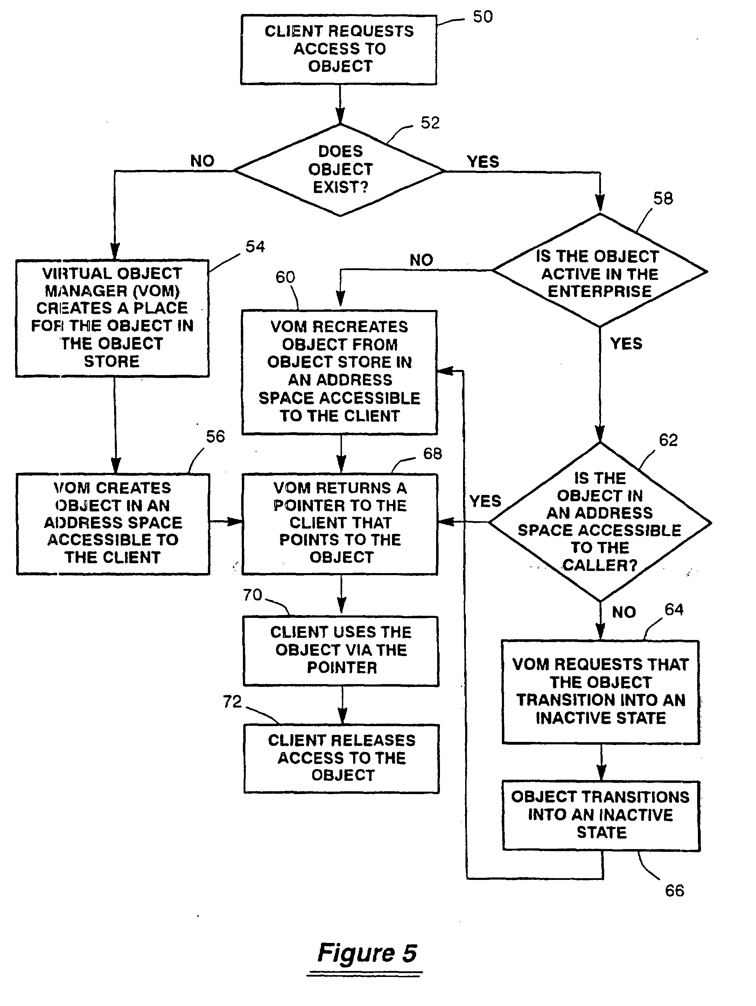

The inventive method for managing objects and access to objects within a distributed environment will now be summarized with reference to Figure 5. First, a client requests access to an object (step 50). Next, the system determines whether the object exists (step 52). If the object does not exist, the virtual object manager creates a place for the object in the object store (step 54). Next, the virtual object manager creates the object in an address space accessible to the client (step 56). If the object does exist, as determined at step 52, the system determines whether the object is active in the enterprise (step 58). If so, the system determines whether the object is in an address space accessible to the caller (i.e., the requesting client or user)(step 62). If not, the virtual object manager request that the object transition into an inactive state (step 64). The object then transitions into an inactive state (step 66), and the virtual object manager then recreates the object from the object store in an address space accessible to the client (step 60). Step 60 is also performed if the object is determined to be inactive at step 58, as shown in the flowchart. Next, the virtual object manager returns a pointer to the requesting client that points to the object in the address space accessible to that client (step 68). The client then uses the object via the pointer (step 70), and then the client releases access to the object (step 72).

The scope of protection of the following claims is not intended to be limited to the specific embodiments described above, since variations of the preferred embodiments will be apparent to those skilled in the art.

## Claims

1. A method for use in a distributed computing environment to provide a client or user with access to a requested object located outside the address space of the user, comprising the steps of:
(A) receiving at a virtual object manager VOM a request for access to a requested object from a user having a first address space;
(B) if said requested object exists and is not active, recreating the requested object by said VOM in said first address space of said user; and
(C.) if said requested object is active, performing one of the following steps C1 or C2 by said VOM:
(C1) if said requested object is in said first address space, providing to the user a pointer that indicates the address of the requested object in said first address space;
(C2) if said requested object is not currently in said first address space, effecting a transition of the requested object into an inactive state and saving the requested object to a persistent store, and then transferring the requested object to said first address space and recreating the requested object in said first address space.

2. A method as recited in Claim 1, further comprising the step of maintaining a virtual object table in said VOM containing an entry for each of a plurality of corresponding objects, wherein each entry indicates: (1) whether the corresponding object is active; (2) the address of an active copy of the object, if there is an active copy of the object; and (3) the address of an inactive copy of the object.

3. A method as recited in claim 1, further comprising the step of maintaining a virtual object store in said VOM containing an entry for each of a plurality of corresponding objects, wherein each entry contains data for the corresponding object, said data being useful to recreate an active copy of the object.

4. A method as recited in claim 2, further comprising the step of maintaining a virtual object store containing an entry for each of a plurality of corresponding objects, wherein each entry contains data for the corresponding object, said data being useful to recreate an active copy of the object.

5. A virtual object manager (14) VOM for use in a distributed computing environment (Fig 1) to provide a client or user with access to a requested object located outside the address space of the user, comprising:
(A) means for receiving a request in said VCM for access to a requested object from a user having a first address space;
(B) means for recreating the requested object in said VOM in said first address space if said requested object exists and is not active; and
(C.) means for performing one of the following steps C1 or C2 if said requested object is active:
(C1) if said requested object is in said first address space, providing to the user a pointer that indicates the address of the requested object in said first address space;
(C2) if said requested object is not currently in said first address space, effecting a transition of the requested object into an inactive state and saving the requested object to a persistent store, and then transferring the requested object to said first address space and recreating the requested object in said first address space.

6. A VOM as recited in claim 5 wherein said VOM comprises a virtual object table (16) containing an entry (20) for each of a plurality of corresponding objects, wherein each entry indicates: (1) whether the corresponding object is active; (2) the address of an active copy of the object , if there is an active copy of the object; and (3) the address in a virtual object store of an inactive copy of the object.

7. A VOM as recited in claim 5 wherein said VOM comprises a virtual object store (18) containing an entry (22) for each of a plurality of corresponding objects, wherein each entry contains data for the corresponding object, said data being useful to recreate an active copy of the object.

8. A VOM as recited in claim 6, further comprising a virtual object store (18) containing an entry (22) for each of a plurality of corresponding objects, wherein each entry contains data for the corresponding object, said data being useful to recreate an active copy of the object.

9. A VCM as recited in claim 5 wherein said distributed computing environment comprises:
(A) a plurality of systems (12a, 12b, 12c, 12d) each of which comprises a client or user object (30, 32, 38, 42) having an associated address space (24, 26, 28);
(B) said virtual object manager (VOM) further comprising means for providing each respective client with access to a requested object located outside the address space of that client.

10. A VOM as recited in claim 5, wherein said VCM further comprises:
a virtual object store (18) containing an entry (22) for each of a plurality of corresponding objects, wherein each entry contains data for the corresponding object, said data being useful to recreate an active copy of the object; and
a virtual object table (16) containing an entry (20) for each of said plurality of corresponding objects, wherein each entry indicates: 1) whether the corresponding object is active; 2) the address of an active copy of the object , if there is an active copy of the object; and 3) the address in said virtual object store of an inactive copy of the object.

## Patentansprüche

1. Ein Verfahren zur Verwendung in einer verteilten Rechenumgebung, um einem Client oder einem Benutzer einen Zugriff auf ein angefordertes Objekt bereitzustellen, das sich außerhalb des Adressraums des Benutzers befindet, umfassend die Schritte:
(A) das Empfangen einer Anforderung an einem Verwalter für virtuelle Objekte (VOM) für den Zugriff auf ein angefordertes Objekt von einem Benutzer, der einen ersten Adressraum besitzt;
(B) wenn das angeforderte Objekt vorhanden und nicht aktiv ist, das Wiederherstellen des angeforderten Objekts durch das VOM im erstem Adressraum des Benutzers; und
(C) wenn das angeforderte Objekt aktiv ist, das Ausführen von einem der folgenden Schritte C1 oder C2 durch das VOM:
(C1) wenn sich das angeforderte Objekt im ersten Adressraum befindet, das Bereitstellen eines Zeigers für den Benutzer, der die Adresse des angeforderten Objekts im ersten Adressraum anzeigt;
(C2) wenn sich das angeforderte Objekt gegenwärtig nicht im ersten Adressraum befindet, das Bewirken eines Übergangs des angeforderten Objekts in einen nicht aktiven Zustand und das Speichern des angeforderten Objekts in einem dauerhaften Speicher und dann das Übertragen des angeforderten Objekts in den ersten Adressraum und das Wiederherstellen des angeforderten Objekts im ersten Adressraum.

2. Ein Verfahren nach Anspruch 1, das ferner den Schritt des Aufrechterhaltens einer Tabelle für virtuelle Objekte im VOM umfasst, die einen Eintrag für jedes aus einer Vielzahl von entsprechenden Objekten beinhaltet, wobei jeder Eintrag folgendes anzeigt: (1) ob das entsprechende Objekt aktiv ist; (2) die Adresse einer aktiven Kopie des Objekts, wenn es eine aktive Kopie des Objekts gibt; und (3) die Adresse einer nicht aktiven Kopie des Objekts.

3. Ein Verfahren nach Anspruch 1, das ferner den Schritt des Aufrechterhaltens eines Speichers für virtuelle Objekte im VOM umfasst, der einen Eintrag für jedes aus einer Vielzahl von entsprechenden Objekten beinhaltet, wobei jeder Eintrag Daten für das entsprechende Objekt enthält, wobei die Daten zur Wiederherstellung einer aktiven Kopie des Objekts nützlich sind.

4. Ein Verfahren nach Anspruch 2, das ferner den Schritt des Aufrechterhaltens eines Speichers für virtuelle Objekte umfasst, der einen Eintrag für jedes aus einer Vielzahl von entsprechenden Objekten beinhaltet, wobei jeder Eintrag Daten für das entsprechende Objekt enthält, wobei die Daten zur Wiederherstellung einer aktiven Kopie des Objekts nützlich sind.

5. Ein Verwalter für virtuelle Objekte (14) (VOM) zum Verwenden in einer verteilten Rechenumgebung (Fig. 1), um einem Client oder einem Benutzer einen Zugriff auf ein angefordertes Objekt bereitzustellen, das sich außerhalb des Adressraums des Benutzers befindet, umfassend:
(A) ein Mittel zum Empfangen einer Anforderung im VOM für den Zugriff auf ein angefordertes Objekt von einem Benutzer, der einen ersten Adressraum besitzt;
(B) ein Mitte zum Wiederherstellen des angeforderten Objekts im VOM im ersten Adressraum, wenn das angeforderte Objekt vorhanden und nicht aktiv ist; und
(C) ein Mittel zum Ausführen von einem der folgenden Schritte C1 oder C2, wenn das angeforderte Objekt aktiv ist:
(C1) wenn sich das angeforderte Objekt im ersten Adressraum befindet, das Bereitstellen eines Zeigers für den Benutzer, der die Adresse des angeforderten Objekts im ersten Adressraum anzeigt;
(C2) wenn sich das angeforderte Objekt gegenwärtig nicht im ersten Adressraum befindet, das Bewirken eines Übergangs des angeforderten Objekts in einen nicht aktiven Zustand und das Speichern des angeforderten Objekts in einem dauerhaften Speicher und dann das Übertragen des angeforderten Objekts in den ersten Adressraum und das Wiederherstellen des angeforderten Objekts im ersten Adressraum.

6. Ein VOM nach Anspruch 5, wobei das VOM eine Tabelle (16) für virtuelle Objekte umfasst, die einen Eintrag (20) für jedes aus einer Vielzahl von entsprechenden Objekten beinhaltet, wobei jeder Eintrag folgendes anzeigt: (1) ob das entsprechende Objekt aktiv ist; (2) die Adresse einer aktiven Kopie des Objekts, wenn es eine aktive Kopie des Objekts gibt; und (3) die Adresse in einem Speicher für virtuelle Objekte einer nicht aktiven Kopie des Objekts.

7. Ein VOM nach Anspruch 5, wobei das VOM einen Speicher (18) für virtuelle Objekte umfasst, der einen Eintrag (22) für jedes aus einer Vielzahl von entsprechenden Objekten beinhaltet, wobei jeder Eintrag Daten für das entsprechende Objekt enthält, wobei die Daten zur Wiederherstellung einer aktiven Kopie des Objekts nützlich sind.

8. Ein VOM nach Anspruch 6, das ferner einen Speicher (18) für virtuelle Objekte umfasst, der einen Eintrag (22) für jedes aus einer Vielzahl von entsprechenden Objekten beinhaltet, wobei jeder Eintrag Daten für das entsprechende Objekt enthält, wobei die Daten zur Wiederherstellung einer aktiven Kopie des Objekts nützlich sind.

9. Ein VOM nach Anspruch 5, wobei die verteilte Rechenumgebung folgendes umfasst:
(A) eine Vielzahl von Systemen (12a, 12b, 12c, 12d) von denen jedes ein Client- oder ein Benutzerobjekt (30, 32, 38, 42) umfasst, das einen zugehörigen Adressraum (24, 26, 28) besitzt;
(B) einen Verwalter für virtuelle Objekte (VOM), der ferner ein Mittel umfasst, das jedem jeweiligen Client einen Zugriff auf ein angefordertes Objekt bereitstellt, das sich außerhalb vom Adressraum dieses Clients befindet.

10. Ein VOM nach Anspruch 5, wobei das VOM ferner folgendes umfasst:
einen Speicher (18) für virtuelle Objekte, der einen Eintrag (22) für jedes aus einer Vielzahl von entsprechenden Objekten beinhaltet, wobei jeder Eintrag Daten für das entsprechende Objekt enthält, wobei die Daten zur Wiederherstellung einer aktiven Kopie des Objekts nützlich sind; und
eine Tabelle (16) für virtuelle Objekte, die einen Eintrag (20) für jedes aus der Vielzahl von entsprechenden Objekten beinhaltet, wobei jeder Eintrag anzeigt: 1) ob das entsprechende Objekt aktiv ist; 2) die Adresse einer aktiven Kopie des Objekts, wenn es eine aktive Kopie des Objekts gibt; und 3) die Adresse im Speicher für virtuelle Objekte einer nicht aktiven Kopie des Objekts.

## Revendications

1. Procédé pour utilisation dans un environnement informatique réparti pour permettre à un client ou à un utilisateur d'accéder à un objet demandé situé en dehors de l'espace d'adresse de l'utilisateur, comprenant les étapes consistant à :
(A) recevoir au niveau d'un gestionnaire d'objets virtuels (VOM) une demande d'accès à un objet demandé d'un utilisateur ayant un premier espace d'adresse ;
(B) si ledit objet demandé existe et n'est pas actif, recréer l'objet demande par ledit VOM dans ledit premier espace d'adresse dudit utilisateur ; et
(C) si ledit objet demandé est actif, effectuer une des étapes suivantes C1 ou C2 par ledit VOM :
(C1) si ledit objet demandé est dans ledit premier espace d'adresse, fournir à l'utilisateur un pointeur qui indique l'adresse de l'objet demandé dans ledit premier espace d'adresse ;
(C2) si ledit objet demandé n'est pas actuellement dans ledit premier espace d'adresse, effectuer une transition de l'objet demandé dans un état inactif et enregistrer ledit objet demandé dans une mémoire persistante, puis transférer ledit objet demandé dans ledit premier espace d'adresse et recréer ledit objet demandé dans ledit premier espace d'adresse.

2. Procédé selon la revendication 1, comprenant en outre l'étape consistant à maintenir une table d'objets virtuels dans ledit VOM contenant une entrée pour chacun d'une pluralité d'objets correspondants, dans laquelle chaque entrée indique : (1) si l'objet correspondant est actif ; (2) l'adresse d'une copie active de l'objet, s'il existe une copie active de l'objet ; et (3) l'adresse d'une copie inactive de l'objet.

3. Procédé selon la revendication 1, comprenant en outre l'étape consistant à maintenir une mémoire d'objets virtuels dans ledit VOM contenant une entrée pour chacun d'une pluralité d'objets correspondants, dans laquelle chaque entrée contient des données pour l'objet correspondant, lesdites données étant utiles pour recréer une copie active de l'objet.

4. Procédé selon la revendication 2, comprenant en outre l'étape consistant à maintenir une mémoire d'objets virtuels contenant une entrée pour chacun d'une pluralité d'objets correspondants, dans laquelle chaque entrée contient des données pour l'objet correspondant, lesdites données étant utiles pour recréer une copie active de l'objet.

5. Un gestionnaire d'objets virtuels (14) VOM pour utilisation dans un environnement informatique réparti (Fig. 1) pour permettre à un client ou à un utilisateur d'accéder à un objet demandé situé à l'extérieur de l'espace d'adresse de l'utilisateur, comprenant :
(A) un moyen pour recevoir une demande dans ledit VOM pour accéder à un objet demandé par un utilisateur ayant un premier espace d'adresse ;
(B) un moyen pour recréer l'objet demandé dans ledit VOM dans ledit premier espace d'adresse si ledit objet demandé existe et n'est pas actif ; et
(C) un moyen pour effectuer l'une des étapes suivantes C1 ou C2 si ledit objet demandé est actif :
(C1) si ledit objet demandé est dans ledit espace d'adresse, fournir à l'utilisateur un pointeur qui indique l'adresse de l'objet demandé dans ledit premier espace d'adresse ;
(C2) si ledit objet demandé n'est pas actuellement dans ledit premier espace d'adresse, effectuer une transition de l'objet demandé dans un état inactif et enregistrer ledit objet demandé dans une mémoire persistante, puis transférer ledit objet demandé dans ledit premier espace d'adresse et recréer ledit objet demandé dans ledit premier espace d'adresse.

6. VOM selon la revendication 5 dans lequel ledit VOM comprend une table d'objets virtuels (16) contenant une entrée (20) pour chacun d'une pluralité d'objets correspondants, dans laquelle chaque entrée indique : (1) si l'objet correspondant est actif ; (2) l'adresse d'une copie active de l'objet, s'il existe une copie active de l'objet ; et (3) l'adresse dans une mémoire d'objets virtuels d'une copie inactive de l'objet.

7. VOM selon la revendication 5 dans lequel ledit VOM comprend une mémoire d'objets virtuels (18) contenant une entrée (22) pour chacun d'une pluralité d'objets correspondants, dans laquelle chaque entrée contient des données pour l'objet correspondant, lesdites données étant utiles pour recréer une copie active de l'objet.

8. VOM selon la revendication 6, comprenant en outre une mémoire d'objets virtuels (18) contenant une entrée (22) pour chacun d'une pluralité d'objets correspondants, dans laquelle chaque entrée contient des données pour l'objet correspondant, lesdites données étant utiles pour recréer une copie active de l'objet.

9. VOM selon la revendication 5 dans lequel ledit environnement informatique réparti comprend :
(A) une pluralité de systèmes (12a, 12b, 12c, 12d) chacun comprenant un objet client ou utilisateur (30, 32, 38, 42) ayant un espace d'adresse associé (24, 26, 28) ;
(B) ledit gestionnaire d'objets virtuels (VOM) comprenant en outre un moyen pour permettre à chaque client respectif d'accéder à un objet demandé situé à l'extérieur de l'espace d'adresse de ce client.

10. VOM selon la revendication 5, dans lequel ledit VOM comprend en outre :
une mémoire d'objets virtuels (18) contenant une entrée (22) pour chacun d'une pluralité d'objets correspondants, dans laquelle chaque entrée contient des données pour l'objet correspondant, lesdites données étant utiles pour recréer une copie active de l'objet ; et
une table d'objets virtuels (16) contenant une entrée (20) pour chacun de ladite pluralité d'objets correspondants, dans laquelle chaque entrée indique : 1) si l'objet correspondant est actif ; 2) l'adresse d'une copie active de l'objet, s'il existe une copie active de l'objet ; et 3) l'adresse dans ladite mémoire d'objets virtuels d'une copie inactive de l'objet.
